# EUROPEAN PATENT APPLICATION

(11) **EP 4 297 392 A1**
(43) Date of publication of application: **27.12.2023**
(21) Application number: 22778743.9
(22) Date of filing: 24.03.2022
(51) Int. Cl.: H04N 5/225

(54) **CAMERA MODULE AND ELECTRONIC DEVICE**

(30) Priority: 29.03.2021 CN 202110330144
(71) Applicant: Vivo Mobile Communication Co., Ltd., Dongguan, Guangdong 523863 (CN)
(72) Inventor: ZHU, Lei, Dongguan, Guangdong 523863 (CN)
(74) Representative: Winter, Brandl - Partnerschaft mbB
(86) International application number: PCT/CN2022/082823
(87) International publication number: WO 2022/206560

(57) **Abstract**

This application discloses a camera module and an electronic device and relates to the technical field of electronic devices. The disclosed camera module includes a first light acquiring mirror (110), a second light acquiring mirror (120), a first reflecting member (131), a second reflecting member (132), and a photosensitive chip (140), where the first reflecting member (131) is disposed between the first light acquiring mirror (110) and the second light acquiring mirror (120), the first reflecting member (131) is arranged opposite to both the first light acquiring mirror (110) and the second light acquiring mirror (120), the second reflecting member (132) is arranged opposite to the first reflecting member (131), and the second reflecting member (132) is arranged opposite to the photosensitive chip (140), where light acquired by the first light acquiring mirror (110) or the second light acquiring mirror (120) is sequentially reflected by the first reflecting member (131) and the second reflecting member (132) to the photosensitive chip (140).

## Description

### CROSS-REFERENCE TO RELATED APPLICATIONS

The present invention claims the priority of the Chinese patent application No. 202110330144.3 and entitled "CAMERA MODULE AND ELECTRONIC DEVICE" filed with the Chinese Patent Office on March 29, 2021, the entire content of which is incorporated by reference in its entirety herein.

### TECHNICAL FIELD

This application relates to the technical field of electronic devices, and in particular, to a camera module and an electronic device.

### BACKGROUND

With the advancement of technologies, electronic devices (for example, mobile phones, or tablet computers) have been greatly developed. As a powerful tool, the electronic devices greatly facilitate life and work of users.

In the related art, to implement front-facing and rear-facing photographing of an electronic device, a front-facing camera module is disposed on a side of a display screen of the electronic device, and a rear-facing camera module is disposed on a side of a rear cover of the electronic device. A front-facing photographing function of the electronic device can be implemented when a user uses the front-facing camera module. A rear-facing photographing function of the electronic device can be implemented when the user uses the rear-facing camera module for photographing.

In the process of implementing the creation of the present invention, it has been found, by the inventors, that the related art has the following problems. The electronic device needs to be provided with at least two camera modules, which occupy a relatively large space of the electronic device, resulting in a relatively large volume of the electronic device.

### SUMMARY

An objective of embodiments of this application is to provide a camera module and an electronic device, which can solve the problem of the relatively large volume of an electronic device.

To resolve the technical problem, this application is implemented as follows:

An embodiment of this application provides a camera module, including a first light acquiring mirror, a second light acquiring mirror, a first reflecting member, a second reflecting member, and a photosensitive chip, where

the first reflecting member is disposed between the first light acquiring mirror and the second light acquiring mirror, the first reflecting member is arranged opposite to the first light acquiring mirror and the second light acquiring mirror, the second reflecting member is arranged opposite to the first reflecting member, and the second reflecting member is arranged opposite to the photosensitive chip, where light acquired by the first light acquiring mirror or the second light acquiring mirror is sequentially reflected by the first reflecting member and the second reflecting member to the photosensitive chip.

An embodiment of this application provides an electronic device, including the camera module, where a side of the electronic device facing a display screen is provided with a first light transmissive region, a side of the electronic device facing away from the display screen is provided with a second light transmissive region, the first light transmissive region is opposite to the second light transmissive region, the first light acquiring mirror is arranged opposite to the first light transmissive region, and the second light acquiring mirror is arranged opposite to the second light transmissive region.

In this embodiment of this application, the first reflecting member is arranged opposite to both the first light acquiring mirror and the second light acquiring mirror, the second reflecting member is arranged opposite to the first reflecting member, and the second reflecting member is arranged opposite to the photosensitive chip. When the camera module uses the first light acquiring mirror for light acquiring, light acquired by the first light acquiring mirror is incident through the first reflecting member and the second reflecting member into the photosensitive chip, so that front-facing photographing can be implemented; and when the camera module uses the second light acquiring mirror for light acquiring, light acquired by the second light acquiring mirror is incident through the first reflecting member and the second reflecting member into the photosensitive chip, so that rear-facing photographing can be implemented. In this solution, the camera module may use two-side light acquiring, so that one camera module can implement front-facing and rear-facing photographing, and in this case, the electronic device can implement front-facing and rear-facing photographing only by providing one camera module, so that the camera module occupies a relatively small installation space of the electronic device, and further the volume of the electronic device is relatively small.

### BRIEF DESCRIPTION OF THE DRAWINGS

FIG. 1 is a schematic structural diagram of a camera module according to an embodiment of this application;
FIG. 2 is a front view of a camera module according to an embodiment of this application;
FIG. 3 is a schematic structural diagram of a first light acquiring mirror, a second light acquiring mirror, and a first reflecting member in a camera module according to an embodiment of this application;
FIG. 4 is a front view of the structure in FIG. 3;
FIG. 5 is a schematic structural diagram of an anti-shake chamber in a camera module according to an embodiment of this application;
FIG. 6 is a schematic structural diagram of a camera module in which a first light acquiring mirror, a second light acquiring mirror, and a first reflecting member are located in an anti-shake chamber according to an embodiment of this application;
FIG. 7 is a schematic structural diagram of a camera module in which a first light acquiring mirror, a second light acquiring mirror, and a first reflecting member are located in an anti-shake chamber in an anti-shake state according to an embodiment of this application; and
FIG. 8 and FIG. 9 are schematic partial diagrams of an electronic device according to an embodiment of this application.

### Descriptions of referential numerals:

100-camera module, 110-first light acquiring mirror, 120-second light acquiring mirror, 131-first reflecting member, 132-second reflecting member, 133-third reflecting member, 134-fourth reflecting member, 140-photosensitive chip, 150-focusing lens group, 151-first lens, 152-second lens, 160-focusing lens, 171-first optical path collimating lens, 172-second optical path collimating lens, 180-anti-shake chamber, 181-through cavity, 200-electronic device, 201-first light transmissive region, and 202-second light transmissive region.

### DETAILED DESCRIPTION

The technical solutions in embodiments of this application are clearly and completely described in the following with reference to the accompanying drawings in the embodiments of this application. Apparently, the described embodiments are merely some rather than all of the embodiments of this application. All other embodiments obtained by a person of ordinary skill in the art based on the embodiments of this application without making creative efforts shall fall within the protection scope of this application.

The specification and claims of this application, and terms "first" and "second" are used to distinguish similar objects, but are unnecessarily used to describe a specific sequence or order. It is to be understood that such used data is interchangeable where appropriate so that the embodiments of this application described herein can be implemented in an order other than those illustrated or described herein. In addition, "and/or" used in this specification and the claims represents at least one of the connected objects, and the character "/" generally indicates that the associated objects are in an "or" relationship.

The camera module provided in the embodiments of this application is described below through specific embodiments with reference to the accompanying drawings in combination with specific application scenarios.

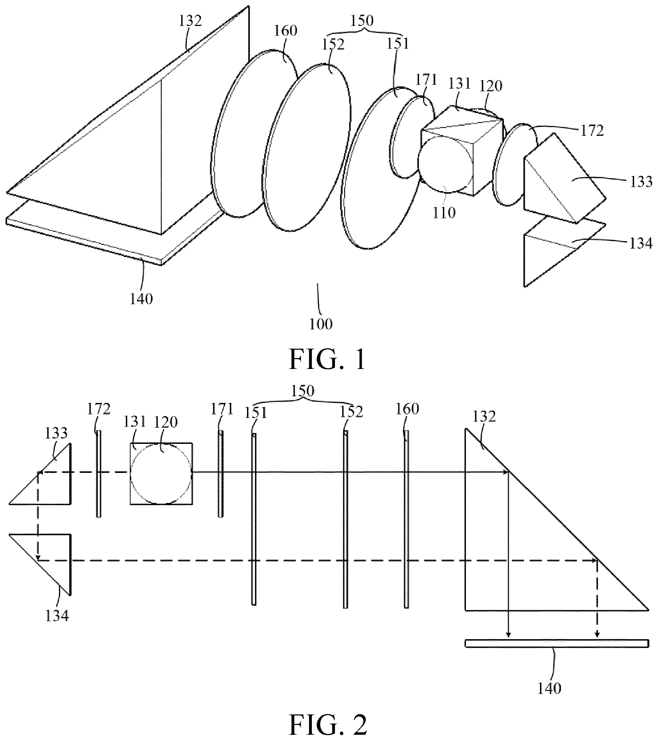

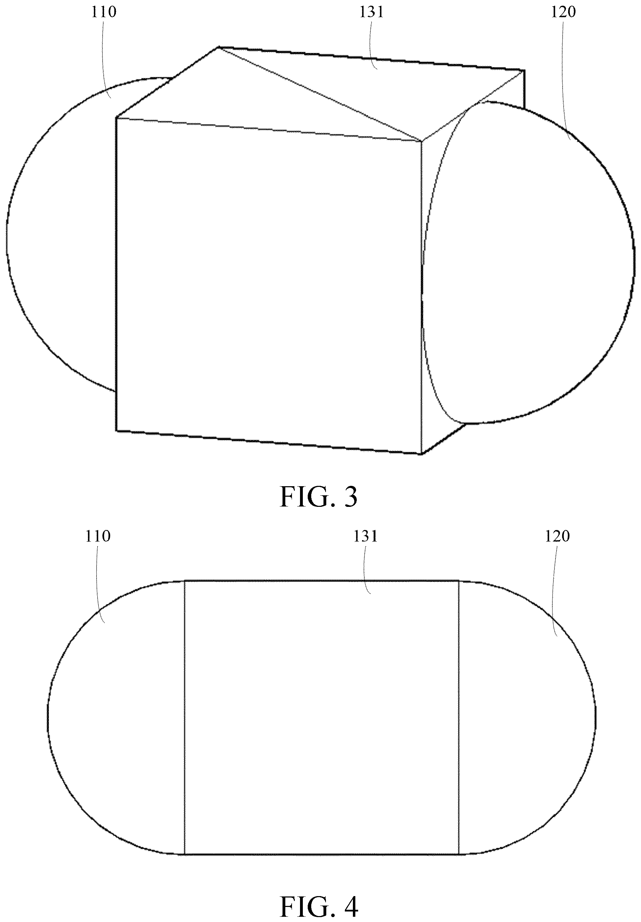

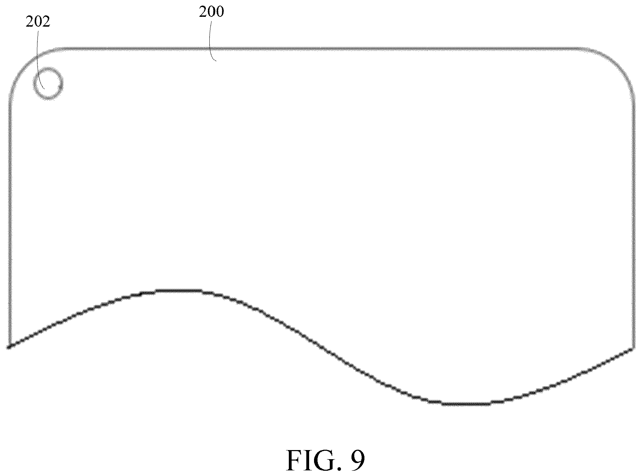

Referring to FIG. 1 to FIG. 9, an embodiment of this application discloses a camera module. A disclosed camera module 100 is applied to an electronic device 200, and the disclosed camera module 100 includes a first light acquiring mirror 110, a second light acquiring mirror 120, a first reflecting member 131, a second reflecting member 132, and a photosensitive chip 140.

The first reflecting member 131 is located between the first light acquiring mirror 110 and the second light acquiring mirror 120, and the first reflecting member 131 is arranged opposite to both the first light acquiring mirror 110 and the second light acquiring mirror 120. The first light acquiring mirror 110 and the second light acquiring mirror 120 are configured to acquire ambient light and project the ambient light onto the first reflecting member 131. The second reflecting member 132 is arranged opposite to the first reflecting member 131, and the second reflecting member 132 is arranged opposite to the photosensitive chip 140. In this case, the second reflecting member 132 is located on a transmission path of light reflected by the first reflecting member 131. The photosensitive chip 140 is located on a transmission path of light reflected by the second reflecting member 132. Light acquired by the first light acquiring mirror 110 or the second light acquiring mirror 120 is sequentially reflected by the first reflecting member 131 and the second reflecting member 132 to the photosensitive chip 140.

In a specific working process, when the camera module 100 uses the first light acquiring mirror 110 for light acquiring, the light acquired by the first light acquiring mirror 110 is incident through the first reflecting member 131 and the second reflecting member 132 into the photosensitive chip 140, so that front-facing photographing can be implemented; when the camera module 100 uses the second light acquiring mirror 120 for light acquiring, the light acquired by the second light acquiring mirror 120 is incident through the first reflecting member 131 and the second reflecting member 132 into the photosensitive chip 140, so that rear-facing photographing can be implemented.

In this embodiments disclosed in this application, the camera module 100 may use two-side light acquiring, so that one camera module 100 can implement front-facing and rear-facing photographing, and in this case, the electronic device 200 can implement front-facing and rear-facing photographing only by providing one camera module 100, so that the camera module 100 occupies a relatively small installation space of the electronic device 200, and further the volume of the electronic device 200 is relatively small.

In addition, the electronic device 200 can implement front-facing and rear-facing photographing by using only one camera module 100, so that a quantity of cameras can be reduced, and further the manufacturing cost of the electronic device 200 can be reduced. In addition, there is no need to reserve an installation space for two camera modules 100 inside the electronic device 200, thereby simplifying the space layout of the electronic device 200.

In the foregoing embodiment, the camera module 100 may further include a module housing, and the module housing provides an installation basis for the first light acquiring mirror 110, the second light acquiring mirror 120, the first reflecting member 131, the second reflecting member 132, the photosensitive chip 140, and other components of the camera module 100.

To further improve the use performance of the camera module 100, in another optional embodiment, a focusing lens group 150 may be arranged between the first reflecting member 131 and the second reflecting member 132, and the focusing lens group 150 may be movable between the first reflecting member 131 and the second reflecting member 132. In this solution, by adjusting the position of the focusing lens group 150 between the first reflecting member 131 and the second reflecting member 132, a focal length of the camera module 100 is adjusted, and then long focus, short focus, macro and other types of photographing of the camera module 100 can be implemented, thereby further improving the use performance of the camera module 100.

The focusing lens group 150 has a variety of combination structures. Referring to FIG. 1, provided is an optional implementation. Specifically, the focusing lens group 150 may include a first lens 151 and a second lens 152. The first reflecting member 131, the first lens 151, the second lens 152, and the second reflecting member 132 are sequentially spaced apart. In other words, the first reflecting member 131, the first lens 151, the second lens 152, and the second reflecting member 132 are distributed along a straight line. The first lens 151 and the second lens 152 are movable between the first reflecting member 131 and the second reflecting member 132. In this solution, by adjusting the position between the first lens 151 and the second lens 152, a larger range of focal length adjustment can be implemented, so as to implement a higher multiple of zooming of the camera module 100.

Certainly, a quantity of lenses in the focusing lens group 150 is not limited to the above two, and more lenses may be provided, so as to implement zooming of different multiples.

Optionally, both the first lens 151 and the second lens 152 may be convex lenses or may be concave lenses, or one of the first lens 151 and the second lens 152 is a convex lens and the other one thereof is a concave lens. Specific types of the first lens 151 and the second lens 152 are not limited herein.

In the foregoing embodiment, movement of the focusing lens group 150 between a first reflecting mirror and a second reflecting mirror may be implemented by using a first driving device. The first driving device is connected to the focusing lens group 150. For example, the first driving device is separately connected to the first lens 151 and the second lens 152, and the first driving device drives the first lens 151 and the second lens 152 to move. The first driving device may be a power structure such as a driving motor, a pneumatic cylinder, or a shape memory alloy. Certainly, other power structures may alternatively be used; this is not limited herein.

In the foregoing embodiment, in a moving process of the first lens 151 and the second lens 152, in a case that a moving stroke thereof is exceeded, the first lens 151 and the second lens 152 may collide, or the first lens 151 and the second lens 152 may collide with another component of the camera module 100.

Based on that, a first limiting portion may be provided in the module housing of the camera module 100, and the first limiting portion may be in limiting coordination with the first lens 151 and the second lens 152 along a moving direction of the first lens 151 and the second lens 152. By this solution, the first lens 151 and the second lens 152 can be prevented from colliding with each other, and in addition the first lens 151 and the second lens 152 can also be prevented from colliding with another component of the camera module 100, thereby improving the safety of the camera module 100.

Optionally, the first limiting portion may be a protruding structure provided in the module housing, and certainly may alternatively be other structures; this is not limited herein.

Further, a focusing lens 160 may be arranged between the second reflecting member 132 and the focusing lens group 150, and the focusing lens 160 is movable between the second reflecting member 132 and the focusing lens group 150. In this solution, the focusing lens 160 can adjust the transmission path of the light reflected by the first reflecting member 131, so that the light can be located at a focus of the photosensitive chip 140 when being incident into the photosensitive chip 140, thereby further improving the photographing quality of the camera module 100.

Optionally, movement of the focusing lens 160 may be implemented by using a second driving device, and the second driving device is connected to the focusing lens 160. The second driving device may be a power structure such as a driving motor, a pneumatic cylinder, or a shape memory alloy. Certainly, other power structures may alternatively be used; this is not limited herein.

In the foregoing embodiment, the focusing lens 160 may be a convex lens or may be a concave lens. The focusing lens 160 and the focusing lens group 150 may be lenses of a same type, but have different functions. The focusing lens 160 is configured to perform focusing, and the focusing lens group 150 is configured to perform focusing.

In the foregoing embodiment, in a moving process of the focusing lens 160, a phenomenon of excessive movement is also apt to occur. Therefore, a second limiting portion may be provided in the module housing, and the second limiting portion can prevent damage caused by excessive movement of the focusing lens 160. Optionally, the second limiting portion may be a protruding structure provided in the module housing, and certainly may alternatively be other limiting structures; this is not limited herein.

In the foregoing embodiment, a driving device may be provided in the camera module 100, and the driving device may drive the first reflecting member 131 to rotate. When the first light acquiring mirror 110 is used for light acquiring, the driving device drives a reflecting surface of the first reflecting member 131 to face the first light acquiring mirror 110, so that the first reflecting member 131 can reflect the light acquired by the first light acquiring mirror 110 to the second reflecting member 132. In this case, because the reflecting surface of the first reflecting member 131 faces away from the second light acquiring mirror 120, the light acquired by the second light acquiring mirror 120 cannot be reflected by the first reflecting member 131.

When the second light acquiring mirror 120 is used for light acquiring, the driving device drives the reflecting surface of the first reflecting member 131 to face the second light acquiring mirror 120, so that the first reflecting member 131 can reflect the light acquired by the second light acquiring mirror 120 to the second reflecting member 132.

In this structure, the structure of the driving device is complicated, connection between the driving mechanism and the first reflecting member 131 is complicated, and therefore the structure of the camera module 100 is complicated. In addition, the first reflecting member 131 needs to rotate, accordingly a rotation space of the first reflecting member 131 needs to be reserved in the camera module 100, and therefore the volume of the camera module 100 is relatively large.

Based on that, in another optional embodiment, the camera module 100 may further include a third reflecting member 133 and a fourth reflecting member 134, and the third reflecting member 133 and the second reflecting member 132 may be located at two opposite sides of the first reflecting member 131. The third reflecting member 133 and the fourth reflecting member 134 may be arranged opposite to each other, and the fourth reflecting member 134 and the second reflecting member 132 are arranged opposite to each other.

The first reflecting member 131 may include a first reflecting surface and a second reflecting surface. The first reflecting surface faces the first light acquiring mirror 110 and the second reflecting member 132. The first reflecting surface may be configured to reflect the light acquired by the first light acquiring mirror 110. The second reflecting surface faces the second light acquiring mirror 120 and the third reflecting member 133, and the second reflecting surface may be configured to reflect the light acquired by the second light acquiring mirror 120.

The light reflected by the first reflecting surface may be incident on the second reflecting member 132. The light reflected by the second reflecting surface may be incident into the third reflecting member 133, and the third reflecting member 133 reflects the light onto the fourth reflecting member 134. Since the fourth reflecting member 134 is opposite to the second reflecting member 132, the fourth reflecting member 134 further reflects the light onto the second reflecting member 132, so that the light is reflected by the second reflecting member 132 onto the photosensitive chip 140.

In this case, there are two transmission paths for the camera module. The first transmission path is composed of the first light acquiring mirror 110, the first reflecting surface, and the second reflecting member 132, namely, the transmission path indicated by the solid arrow in FIG. 2. The second transmission path is composed of the second light acquiring mirror 120, the second reflecting surface, the third reflecting member 133, the fourth reflecting member 134, and the second reflecting member 132, namely, the transmission path indicated by the dashed arrow in FIG. 2.

In this solution, the first reflecting member 131 forms two optical path transmission paths through different reflecting surfaces, and there is no need to rotate the first reflecting member 131. Therefore, the camera module 100 does not need to be provided with a driving device to drive the first reflecting member 131, so that the structure of the camera module 100 is simple. In addition, the first reflecting member 131 does not need to rotate, accordingly a rotation space of the first reflecting member 131 does not need to be reserved in the camera module 100, and therefore the volume of the camera module 100 is relatively small.

In the foregoing embodiment, in a direction in which the first reflecting member 131 points to the second reflecting member 132, projection profiles of the first reflecting member 131 and the fourth reflecting member 134 may be located within a projection profile of the second reflecting member 132, so that both light reflected by the first reflecting member 131 and light reflected by the fourth reflecting member 134 can be incident onto the second reflecting member 132.

Optionally, the first reflecting member 131 may be a columnar structure, for example, a triangular prism, a quadrangular prism, or a column, and the first reflecting surface and the second reflecting surface may be diagonal inclined surfaces of a columnar structure. Alternatively, the first reflecting member 131 may be formed by splicing two triangular prisms, and splicing surfaces of the two triangular prisms are the first reflecting surface and the second reflecting surface, respectively. In other words, the first reflecting surface and the second reflecting surface are parallel to each other. Included angle between the first reflecting surface and a light incident surface of the triangular prism and between the second reflecting surface and the light incident surface of the triangular prism may be 45°. The two triangular prisms may be bonded with the first light acquiring mirror 110 and the second light acquiring mirror 120, respectively. Certainly, the first reflecting member 131 may alternatively be of another structure; this is not limited herein.

In another solution, the second reflecting member 132 may alternatively be a triangular prism, an inclined surface of the triangular prism is the reflecting surface of the second reflecting member 132, and an included angle between the reflecting surface of the second reflecting member 132 and the photosensitive chip 140 may be 45°. Certainly, the second reflecting member 132 may alternatively be of another structure; this is not limited herein.

In the foregoing embodiment, shapes of the third reflecting member 133 and the fourth reflecting member 134 may be the same as that of the second reflecting member 132, with the only difference in that volumes of the third reflecting member 133 and the fourth reflecting member 134 are each smaller than that of the second reflecting member 132. In addition, the third reflecting member 133 and the fourth reflecting member 134 may alternatively be of an integrated structure, and specific structures of the third reflecting member 133 and the fourth reflecting member 134 are not limited herein.

In the foregoing embodiment, the light reflected by the fourth reflecting member 134 needs to pass through the focusing lens group 150 and the focusing lens 160. Therefore, projection profiles of the fourth reflecting member 134 and the first reflecting member 131 are also located within projection profiles of the focusing lens group 150 and the focusing lens 160.

In the foregoing embodiment, the light reflected by the first reflecting surface and the second reflecting surface is apt to be scattered, resulting in that the amount of light incident onto the second reflecting member 132 is relatively small, and further the amount of light received by the photosensitive chip 140 is relatively small.

Based on that, in another optional embodiment, the camera module 100 disclosed in this application may further include a first optical path collimating lens 171 and a second optical path collimating lens 172. The first optical path collimating lens 171 may be located between the first reflecting member 131 and the second reflecting member 132. The second optical path collimating lens 172 may be located between the first reflecting member 131 and the third reflecting member 133.

In this solution, the first optical path collimating lens 171 and the second optical path collimating lens 172 can convert divergent light into parallel light, thereby improving the light utilization rate of the camera, and further improving the optical performance of the camera module.

In the foregoing embodiment, the second reflecting member 132, the focusing lens 160, the focusing lens group 150, the first optical path collimating lens 171, the first reflecting member 131, the second optical path collimating lens 172, and the third reflecting member 133 may be located on a straight line, the photosensitive chip 140 may be located below the second reflecting member 132, and the fourth reflecting member 134 may be located below the third reflecting member 133 and located on a same side as the photosensitive chip 140.

Typically, a user holds an electronic device 200 to perform image photographing. Because shaking occurs during handheld photographing, the quality of an image photographed by the electronic device 200 is relatively poor.

Based on that, in another optional embodiment, the camera module 100 disclosed in this application may further include an anti-shake chamber 180, and the anti-shake chamber 180 may be provided with a through cavity 181. The through cavity 181 is defined as running from one side of the anti-shake chamber 180 to the other side. The first light acquiring mirror 110, the first reflecting member 131, and the second light acquiring mirror 120 may be distributed along an axial direction of the through cavity 181 and disposed in the through cavity 181. The first light acquiring mirror 110 and the second light acquiring mirror 120 may be exposed out of the anti-shake chamber 180 through the through cavity 181.

A driving mechanism may be disposed in the anti-shake chamber 180, the driving mechanism may be connected to the first reflecting member 131, and the driving mechanism may drive the first reflecting member 131 to drive the first light acquiring mirror 110 and the second light acquiring mirror 120 to move in the through cavity 181.

In this solution, the driving mechanism can drive the first light acquiring mirror 110, the second light acquiring mirror 120, and the first reflecting member 131 to move along a direction opposite to a shaking direction of the camera module 100, so that a shaking amount of the camera module 100 can be compensated, and further an anti-shaking function of the camera module can be implemented, thereby improving the photographing quality of the camera module 100.

For the camera module 100, in a photographing process, when a hand of a user shakes, a gyroscope detects that the camera module 100 tilts, the gyroscope transmits data such as a tilt angle of the camera module 100 to a control chip, so that the control chip inputs a corresponding angle compensation amount, and then the driving mechanism drives the first light acquiring mirror 110 and the second light acquiring mirror 120 to move, thereby implementing anti-shake.

The control chip may be a control chip of the camera module, or may be a control chip in the electronic device 200. The control chip is a well-known technique; this is not described herein again.

In the foregoing solution, the first light acquiring mirror 110, the second light acquiring mirror 120, and the first reflecting member 131 can move along a first plane, the first plane may be perpendicular to an optical axis, the first plane is perpendicular to an axis of the through cavity 181, and in other words, the axis of the through cavity 181 is parallel to the optical axis; and/or, the first light acquiring mirror 110, the second light acquiring mirror 120, and the first reflecting member 131 can rotate along an axis on at least one first plane; and/or, the first light acquiring mirror 110, the second light acquiring mirror 120, and the first reflecting mirror may rotate along an optical axis. Moving directions of the first light acquiring mirror 110, the second light acquiring mirror 120, and the first reflecting member 131 are not limited herein.

In the foregoing embodiment, the driving mechanism may be a power structure such as a driving motor, a pneumatic cylinder, or a shape memory alloy. Certainly, other power structures may alternatively be used; this is not limited herein.

Optionally, the light reflected by the first reflecting member 131 needs to be reflected to the second reflecting member 132, and therefore the anti-shake chamber 180 needs to be transmissive. In this case, the side of the anti-shake chamber 180 facing the reflecting surface of the first reflecting member 131 may be made of a light transmissive material, for example, transparent glass, or transparent plastic. Alternatively, a side of the anti-shake chamber 180 facing the reflecting surface of the first reflecting member 131 may be provided with a light transmissive hole, so as to be used for optical path transmission of the first reflecting member 131. The reflecting surface of the first reflecting member 131 herein includes the first reflecting surface and the second reflecting surface described above.

In the foregoing embodiment, the power structure such as the driving motor or the pneumatic cylinder has a large volume and occupies a relatively large installation space of the anti-shake chamber 180, and therefore the volume of the camera module 100 is relatively large. In addition, a commutation time of the power structure such as the driving motor and the pneumatic cylinder is long, the sensitivity of the first reflecting member 131 is poor, and therefore the anti-shake performance is relatively poor.

In another optional embodiment, the driving mechanism may include a coil and a magnet, one of the anti-shake chamber 180 and the first reflecting member 131 may be provided with the coil, and the other one thereof may be provided with the magnet. The coil and the magnet may be arranged opposite to each other. When the coil is powered, the first light acquiring mirror 110, the first reflecting member 131, and the second light acquiring mirror 120 can move inside the through cavity 181.

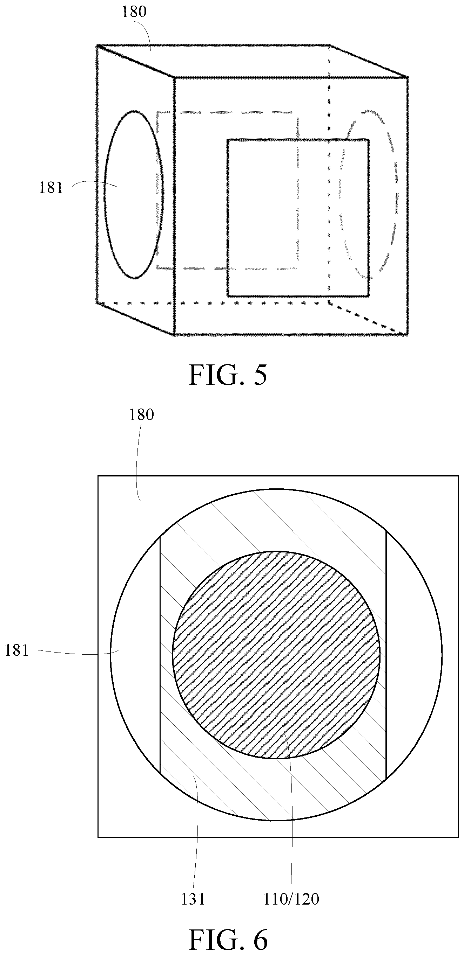

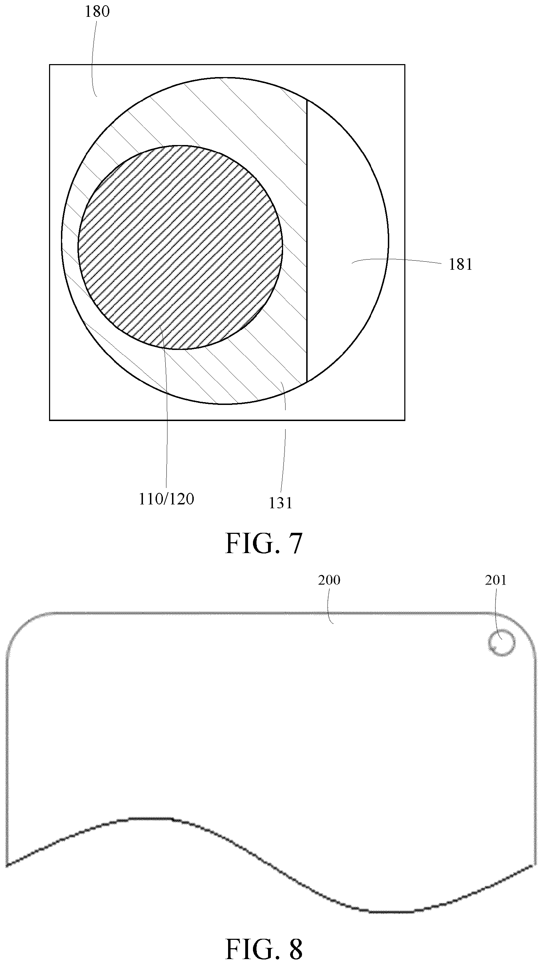

In a specific operation process, referring to FIG. 6 and FIG. 7, FIG. 6 is a schematic diagram of the camera module when it does not shake, and FIG. 7 is a schematic diagram of the camera module when it shakes. When the coil is powered, the powered coil incurs an ampere force in a magnetic field generated by the magnet, thereby driving the first reflecting member 131 to move. A specific motion direction of the first reflecting member 131 may be determined by using a left-hand criterion, and a motion direction of the first reflecting member 131 is correlated with positions and quantities of coils and magnets, so that the coils and the magnets may be arranged according to a specific anti-shake requirement.

In this solution, the coil and the magnet have a simple structure and a small volume, and therefore the volume of the camera module 100 is relatively small. In addition, currents in different directions are applied to the coils, thereby generating ampere forces in different directions, so that the commutation time of the first reflecting member 131 is short, and the sensitivity of the first reflecting member 131 is high, thereby improving the anti-shake performance of the camera module 100.

In the foregoing embodiment, the first reflecting member 131 and the anti-shake chamber 180 may be movably connected by using a component such as a bead or a rotating shaft. Then, the motion direction of the first reflecting member 131 is limited by the component such as the bead or the rotating shaft, and therefore, the anti-shake performance is poor.

In another optional embodiment, the quantity of magnets may be multiple, and the quantity of coils may be multiple. The first reflecting member 131 may include a plurality of side surfaces, each side surface may be provided with at least one magnet or coil, and the plurality of coils and the plurality of magnets are disposed in one-to-one correspondence.

In this solution, when the camera module 100 does not shake, an outer circumference of the first reflecting member 131 is provided with magnets or coils, so that the coils and the magnets on each side surface coordinate with each other, thereby implementing suspension of the first reflecting member 131. The first reflecting member 131 in a suspended state may have a tendency of moving along any angle and direction in the through cavity 181, thereby improving the anti-shake range of the camera module 100, and implementing three-dimensional anti-shake of the camera.

When the camera module 100 shakes, the magnitude of and the direction of a current in the coil can be adjusted, so that by using the direction and the magnitude of a driving force received by the first reflecting member 131, the first reflecting member 131 can be controlled to move in the through cavity 181.

In the anti-shake process of the camera, due to the influence of a hysteresis effect, when the current in the coil recovers to an initial value, where the initial value refers to a value of the current in the coil when the first reflecting member 131 moves, the driving force received by the first reflecting member 131 is not directly reduced to an initial state, but is gradually reduced to the initial state. The initial state refers to the suspended state described above. In the slowly changing process of the driving force, the first reflecting member 131 slowly moves accordingly, so that anti-shake of the camera module 100 during the whole photographing process can be implemented, thereby further improving the photographing quality of the camera module 100. The hysteresis effect is common sense; this is not specifically described herein.

Optionally, the first reflecting member 131 may be a quadrangular prism, each of six surfaces of the quadrangular prism may be provided with coils, the anti-shake chamber 180 may alternatively be a quadrangular prism, and each of six surfaces of the quadrangular prism may be provided with magnets. Alternatively, the anti-shake chamber 180 may be made of a magnetic material. Each surface of the first reflecting member 131 may be composed of a plurality of small coils. By using different driving forces of the plurality of small coils, the camera module 100 may move in more directions and angles in real time.

In another optional embodiment, magnetic poles of the two opposite magnets are the same, and by using this solution, a magnetic flux in the anti-shake chamber 180 can be ensured to be zero, thereby avoiding the influence of the magnetic field on the quality of a photographed image.

Based on the camera module 100 disclosed in this embodiment of this application, an embodiment of this application further discloses an electronic device 200. The disclosed electronic device 200 includes the camera module 100 described in any one of the foregoing embodiments. A side of the electronic device 200 facing the display screen is provided with a first light transmissive region 201, and a side of the electronic device 200 facing away from the display screen may be provided with a second light transmissive region 202. The first light transmissive region 201 may be opposite to the second light transmissive region 202, the first light acquiring mirror 110 may be arranged opposite to the first light transmissive region 201, and the second light acquiring mirror 120 may be arranged opposite to the second light transmissive region 202.

Ambient light can pass through the first light transmissive region 201 to enter the first light acquiring mirror 110, and light acquired by the first light acquiring mirror 110 is incident through the first reflecting member 131 and the second reflecting member 132 into the photosensitive chip 140, so that front-facing photographing can be implemented. Ambient light can enter the second light acquiring mirror 120 through the second light transmissive region 202, and light acquired by the second light acquiring mirror 120 is incident through the first reflecting member 131 and the second reflecting member 132 into the photosensitive chip 140, so that rear-facing photographing can be implemented.

In this solution, the camera module 100 may use two-side light acquiring, so that one camera module 100 can implement front-facing and rear-facing photographing, and in this case, the electronic device 200 can implement front-facing and rear-facing photographing only by providing one camera module 100, so that the camera module 100 occupies a relatively small installation space of the electronic device 200, and further the volume of the electronic device 200 is relatively small.

Optionally, a device housing of the electronic device 200 may include a front housing and a rear cover, the front housing is configured to mount a display screen, the first light transmissive region 201 may be provided on the front housing, and the second light transmissive region 202 may be provided on the rear cover. Alternatively, the first light transmissive region 201 may be disposed on the display screen, and the camera module 100 is located below the display screen. The first light transmissive region 201 and the second light transmissive region 202 may be through holes, or may be regions on the device housing or the display screen made of a transparent material.

In the foregoing embodiment, when the electronic device 200 performs front-facing photographing, the second light acquiring mirror 120 can also acquire light, thereby affecting the front-facing photographing.

Based on that, in another optional embodiment, the electronic device 200 may further include a first shielding member and a second shielding member that are movable. The first shielding member and the second shielding member may be located on two opposite sides of the electronic device 200. The first shielding member may be located between the first light transmissive region 201 and the first light acquiring mirror 110. The second shielding member may be located between the second light transmissive region 202 and the second light acquiring mirror 120. The first shielding member may be configured to shield the first light transmissive region 201. The second shielding member may be configured to shield the second light transmissive region 202.

In a specific operation process, when the electronic device 200 performs front-facing photographing, the second shielding member may shield the second light transmissive region 202, so that ambient light cannot enter the second light acquiring mirror 120, thereby cutting off a light acquisition path of the second light acquiring mirror 120, and therefore influence on the front-facing photographing of the electronic device 200 is not apt to be caused.

When the electronic device 200 performs rear-facing photographing, the first shielding member may shield the first light transmissive region 201, so that ambient light cannot enter the first light acquiring mirror 110, thereby cutting off a light acquisition path of the first light acquiring mirror 110, and therefore influence on the rear-facing photographing of the electronic device 200 is not apt to be caused.

By using this solution, the photographing quality of electronic device 200 can be further improved.

Optionally, the first shielding member and the second shielding member may be disposed outside the device housing, and the first shielding member and the second shielding member may be rotatably connected to the device through a rotating shaft. When the first light transmissive region 201 and the second light transmissive region 202 need to be shielded, a user may cover the first light transmissive region 201 and the second light transmissive region 202 by manually rotating the first shielding member and the second shielding member.

Alternatively, the first shielding member and the second shielding member may be disposed inside the device housing, and the first shielding member and the second shielding member are connected to the first driving motor and the second driving motor, respectively. When the first light transmissive region 201 and the second light transmissive region 202 need to be shielded, a user may drive the first shielding member and the second shielding member to rotate through a first driving motor and a second driving motor, so as to shield the first light transmissive region 201 and the second light transmissive region 202.

Optionally, the first shielding member and the second shielding member may be opaque metal sheets or opaque plastic sheets. Certainly, the first shielding member and the second shielding member may be made of other materials.

The electronic device disclosed in this embodiment of this application may be a device such as a smartphone, a tablet computer, an e-book reader, a wearable device (for example, a smartwatch), or an electronic game machine. The specific type of the electronic device is not limited in this embodiment of this application.

The embodiments of this application have been described above with reference to the accompanying drawings. This application is not limited to the specific embodiments described above, and the specific embodiments described above are merely exemplary and not limitative. Those of ordinary skill in the art may make various variations under the teaching of this application without departing from the spirit of this application and the protection scope of the claims, and such variations shall all fall within the protection scope of this application.

## Claims

1. A camera module, comprising a first light acquiring mirror (110), a second light acquiring mirror (120), a first reflecting member (131), a second reflecting member (132), and a photosensitive chip (140), wherein
the first reflecting member (131) is disposed between the first light acquiring mirror (110) and the second light acquiring mirror (120), the first reflecting member (131) is arranged opposite to both the first light acquiring mirror (110) and the second light acquiring mirror (120), the second reflecting member (132) is arranged opposite to the first reflecting member (131), and the second reflecting member (132) is arranged opposite to the photosensitive chip (140), wherein light acquired by the first light acquiring mirror (110) or the second light acquiring mirror (120) is sequentially reflected by the first reflecting member (131) and the second reflecting member (132) to the photosensitive chip (140).

2. The camera module according to claim 1, wherein a focusing lens group (150) is arranged between the first reflecting member (131) and the second reflecting member (132), and the focusing lens group (150) is movable between the first reflecting member (131) and the second reflecting member (132).

3. The camera module according to claim 2, wherein the focusing lens group (150) comprises a first lens (151) and a second lens (152), the first reflecting member (131), the first lens (151), the second lens (152), and the second reflecting member (132) are sequentially spaced apart, the first lens (151) and the second lens (152) are movable between the first reflecting member (131) and the second reflecting member (132).

4. The camera module according to claim 3, wherein a focusing lens (160) is arranged between the second reflecting member (132) and the focusing lens group (150), and the focusing lens (160) is movable between the second reflecting member (132) and the focusing lens group (150).

5. The camera module according to claim 1, wherein the camera module (100) further comprises a third reflecting member (133) and a fourth reflecting member (134), the third reflecting member (133) and the second reflecting member (132) are located on two opposite sides of the first reflecting member (131), the third reflecting member (133) and the fourth reflecting member (134) are arranged opposite to each other, and the fourth reflecting member (134) and the second reflecting member (132) are arranged opposite to each other;
the first reflecting member (131) comprises a first reflecting surface and a second reflecting surface, the first reflecting surface faces the first light acquiring mirror (110) and the second reflecting member (132), and the first reflecting surface is configured to reflect the light acquired by the first light acquiring mirror (110); the second reflecting surface faces the second light acquiring mirror (120) and the third reflecting member (133), and the second reflecting surface is configured to reflect the light acquired by the second light acquiring mirror (120); and
light reflected by the first reflecting surface is incident onto the second reflecting member (132), and light reflected by the second reflecting surface is incident into the third reflecting member (133).

6. The camera module according to claim 5, wherein the camera module (100) further comprises a first optical path collimating lens (171) and a second optical path collimating lens (172), the first optical path collimating lens (171) is located between the first reflecting member (131) and the second reflecting member (132), and the second optical path collimating lens (172) is located between the first reflecting member (131) and the third reflecting member (133).

7. The camera module according to claim 1, wherein the camera module (100) further comprises an anti-shake chamber (180), the anti-shake chamber (180) is provided with a through cavity (181), the first light acquiring mirror (110), the first reflecting member (131), and the second light acquiring mirror (120) are distributed along an axial direction of the through cavity (181) and are arranged in the through cavity (181), a driving mechanism is disposed in the anti-shake chamber (180), the driving mechanism is connected to the first reflecting member (131), and the driving mechanism drives the first reflecting member (131) to drive the first light acquiring mirror (110) and the second light acquiring mirror (120) to move in the through cavity (181).

8. The camera module according to claim 7, wherein the driving mechanism comprises a coil and a magnet, one of the anti-shake chamber (180) and the first reflecting member (131) is provided with the coil, and the other one thereof is provided with the magnet; the coil is arranged opposite to the magnet; and when the coil is powered, the first light acquiring mirror (110), the first reflecting member (131), and the second light acquiring mirror (120) move in the through cavity (181).

9. The camera module according to claim 8, wherein there are a plurality of magnets, and there are a plurality of coils; the first reflecting member (131) comprises a plurality of side surfaces, and each side surface is provided with at least one of the magnets or the coils; and the plurality of coils and the plurality of magnets are arranged in one-to-one correspondence.

10. An electronic device, comprising the camera module according to any one of claims 1 to 9, wherein a side of the electronic device (200) facing a display screen is provided with a first light transmissive region (201), a side of the electronic device (200) facing away from the display screen is provided with a second light transmissive region (202), the first light transmissive region (201) is opposite to the second light transmissive region (202), the first light acquiring mirror (110) is arranged opposite to the first light transmissive region (201), and the second light acquiring mirror (120) is arranged opposite to the second light transmissive region (202).

11. The electronic device according to claim 10, wherein the electronic device (200) further comprises a first shielding member and a second shielding member that are movable, the first shielding member and the second shielding member are located at two opposite sides of the electronic device (200), the first shielding member is between the first light transmissive region (201) and the first light acquiring mirror (110), the second shielding member is located between the second light transmissive region (202) and the second light acquiring mirror (120), the first shielding member is configured to shield the first light transmissive region (201), and the second shielding member is configured to shield the second light transmissive region (202).
